(19) **Europäisches Patentamt**
**European Patent Office**
**Office européen des brevets**

(11) **EP 4 550 821 A1**

(12) **EUROPEAN PATENT APPLICATION**

(43) Date of publication:
**07.05.2025 Bulletin 2025/19**

(21) Application number: **24209249.2**

(22) Date of filing: **28.10.2024**

(51) International Patent Classification (IPC):
**H04N 25/63** (2023.01)   **H04N 23/73** (2023.01)

(52) Cooperative Patent Classification (CPC):
**H04N 25/63; H04N 23/73; H04N 23/741**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 KR 20230150106**

(71) Applicant: **Samsung Electronics Co., Ltd.
Suwon-si, Gyeonggi-do 16677 (KR)**

(72) Inventors:
• **KWON, Kinam
  16678 Suwon-si (KR)**

• **SO, Seo hee
  16678 Suwon-si (KR)**
• **PARK, Kyungbae
  16678 Suwon-si (KR)**
• **AHN, Sungmo
  16678 Suwon-si (KR)**
• **YUN, Sungyoung
  16678 Suwon-si (KR)**
• **LEE, Hyong Euk
  16678 Suwon-si (KR)**
• **LIM, Younhee
  16678 Suwon-si (KR)**

(74) Representative: **Arnold & Siedsma
Bezuidenhoutseweg 57
2594 AC The Hague (NL)**

(54) **METHOD AND DEVICE WITH IMAGE ACQUISITION**

(57)    A processor-implemented method with image acquisition includes acquiring image frames comprising a shutter-off frame corresponding to a shutter-off through a sensor by performing the shutter-off during continuous shooting, acquiring a measurement signal corresponding to a target image frame, removing, based on a target shutter-off frame corresponding to the target image frame, a first remaining signal corresponding to the target shutter-off frame from a measurement signal corresponding to shutter-off period frames comprising image frames between the target image frame and the target shutter-off frame, and generating a target image frame from which a second remaining signal is removed based on one or more of the shutter-off period frames from which the first remaining signal is removed.

FIG. 6

EP 4 550 821 A1

## Description

BACKGROUND

1. Field

The following disclosure relates to a method and device with image acquisition.

2. Description of Related Art

An optical camera system may convert light incident through a lens to an imaging sensor into an electrical signal through a photodiode and construct an image by measuring the electrical signal. In the process of converting photons into an electrical signal through the photodiode, electric charges converted during an exposure time may be accumulated in pixels.

High-speed continuous shooting may accelerate the operating speed of normal cameras and acquire images using the same technology as general shooting. In high-speed shooting, the exposure time may decrease due to a fast image acquisition rate for each frame to acquire multiple images at a high speed. The short exposure time may reduce the amount of light received by a camera sensor system and thus, may reduce the size of acquired signals. The effect therefrom may intensify as the speed of high-speed shooting accelerates, resulting in deterioration in image quality.

Analog/digital amplification that increases the size of electrical signals may be used to compensate for the amount of light reduced during high-speed shooting, but the analog/digital amplification has an issue of noise amplification during the process. To increase the amount of light received, the area per unit pixel may be increased by increasing the size of the sensor, which, however, has limitations as having effects on the size of a form factor.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method with image acquisition includes: acquiring image frames comprising a shutter-off frame corresponding to a shutter-off through a sensor by performing the shutter-off during continuous shooting; acquiring a first measurement signal corresponding to a target image frame; removing, based on a target shutter-off frame corresponding to the target image frame, a first remaining signal corresponding to the target shutter-off frame from a second measurement signal corresponding to one or more shutter-off period frames comprising one or more image frames between the target image frame and the target shutter-off frame; and generating an enhanced target image frame from which a second remaining signal is removed based on one or more of the shutter-off period frames from which the first remaining signal is removed.

The removing of the first remaining signal may include: estimating the first remaining signal based on the target shutter-off frame and parameter information of the sensor; and removing the first remaining signal from the measurement signal corresponding to the shutter-off period frames.

The estimating of the first remaining signal may include estimating a remaining signal due to a signal generated before a shutter-off corresponding to the target shutter-off frame based on the target shutter-off frame and information on a photodiode forming the sensor.

The removing of the first remaining signal may include removing the first remaining signal from the measurement signal corresponding to the shutter-off period frames by inputting the target shutter-off frame into a first artificial neural network model.

The generating of the target image frame from which the second remaining signal is removed may include generating the target image frame from which the second remaining signal is removed by inputting shutter-off period frames from which the first remaining signal is removed into a second artificial neural network model.

The method may include restoring an image frame corresponding to the target shutter-off frame by inputting a predetermined number of before and after image frames based on the target shutter-off frame into a third artificial neural network model.

The shutter-off frame may construct an image with a residual charge of a photodiode forming the sensor without acquiring a signal during a time corresponding to the shutter-off.

The generating of the target image frame from which the second remaining signal is removed may include generating a target image frame from which a remaining signal due to a signal after a shutter-off corresponding to the target shutter-off frame is removed.

The sensor may include an organic photodiode (OPD).

The sensor may include a hybrid image sensor comprising an OPD and a silicon photodiode.

The sensor may include an image sensor and an optical structure for improving sensitivity.

The acquiring of the image frames may include: determining a frequency and timing of the shutter-off; and acquiring the image frames by performing the shutter-off according to the determined frequency and timing.

The acquiring of the image frames may include acquiring the image frames by periodically performing the shutter-off.

The removing of the first remaining signal may include: acquiring a residual signal between the shutter-off period frames; and acquiring the shutter-off period frames from which the first remaining signal is removed based on the residual signal between the shutter-off period frames.

The generating of the target image frame from which the second remaining signal is removed may include: generating a residual signal between the shutter-off period frames from which the first remaining signal is removed; and generating the target image frame from which the second remaining signal is removed, based on the residual signal between the shutter-off period frames from which the first remaining signal is removed.

The method may include: acquiring a short-term image frame corresponding to an exposure time shorter than an exposure time of the image frames; and generating a high dynamic range (HDR) image based on the short-term image frame.

In one or more general aspects, a non-transitory computer-readable storage medium may store instructions that, when executed by one or more processors, configure the one or more processors to perform any one, any combination, or all of operations and/or methods described herein.

In one or more general aspects, an electronic device includes: an image signal acquisition device comprising a sensor configured to acquire image frames comprising a shutter-off frame corresponding to a shutter-off by performing the shutter-off during continuous shooting, and acquire a measurement signal corresponding to a target image frame; and an image signal restoration device configured to remove, based on a target shutter-off frame corresponding to the target image frame, a first remaining signal corresponding to the target shutter-off frame from a measurement signal corresponding to shutter-off period frames comprising image frames between the target image frame and the target shutter-off frame, and generate a target image frame from which a second remaining signal is removed based on one or more of the shutter-off period frames from which the first remaining signal is removed.

For the removing of the first remaining signal, the image signal restoration device may be configured to: estimate the first remaining signal based on the target shutter-off frame and parameter information of the sensor, and remove the first remaining signal from the measurement signal corresponding to the shutter-off period frames.

For the estimating of the first remaining signal, the image signal restoration device may be configured to estimate a remaining signal due to a signal generated before a shutter-off corresponding to the target shutter-off frame based on the target shutter-off frame and information on a photodiode forming the sensor.

For the removing of the first remaining signal, the image signal restoration device may be configured to remove the first remaining signal from the measurement signal corresponding to the shutter-off period frames by inputting the target shutter-off frame into a first artificial neural network model.

For the generating of the target image frame, the image signal restoration device may be configured to generate the target image frame from which the second remaining signal is removed by inputting shutter-off period frames from which the first remaining signal is removed into a second artificial neural network model.

The image signal restoration device may be configured to restore an image frame corresponding to the target shutter-off frame by inputting a predetermined number of before and after image frames based on the target shutter-off frame into a third artificial neural network model.

The shutter-off frame may construct an image with a residual charge of a photodiode forming the sensor without acquiring a signal during a time corresponding to the shutter-off.

For the generating of the target image frame, the image signal restoration device may be configured to generate a target image frame from which a remaining signal due to a signal after a shutter-off corresponding to the target shutter-off frame is removed.

The sensor may include an organic photodiode (OPD).

The sensor may include a hybrid image sensor comprising an OPD and a silicon photodiode.

The sensor may include an image sensor and an optical structure for improving sensitivity.

For the acquiring of the image frames, the image signal acquisition device may be configured to: determine a frequency and timing of the shutter-off, and acquire the image frames by performing the shutter-off according to the determined frequency and timing.

For the acquiring of the image frames, the image signal acquisition device may be configured to acquire the image frames by periodically performing the shutter-off.

For the removing of the first remaining signal, the image signal restoration device may be configured to: acquire a residual signal between the shutter-off period frames, and acquire the shutter-off period frames from which the first remaining signal is removed based on the residual signal between the shutter-off period frames.

For the generating of the target image frame, the image signal restoration device may be configured to: generate a residual signal between the shutter-off period frames from which the first remaining signal is removed, and generate the target image frame from which the second remaining signal is removed, based on the residual signal between the shutter-off period frames from which the first remaining signal is removed.

The image signal acquisition device may be configured to acquire a short-term image frame corresponding to an exposure time shorter than an exposure time of the image frames, and the image signal restoration device may be configured to generate a high dynamic range (HDR) image based on the short-term image frame.

In one or more general aspects, a processor-implemented method with image acquisition includes: generating a restored signal by removing, from a measurement signal corresponding an image frame acquired after a shutter-off frame, a first remaining signal corresponding to the shutter-off frame, and removing, from the measurement signal corresponding the image frame acquired after the shutter-off frame, a second remaining signal corresponding to one or more image frames acquired after the shutter-off frame and before the image frame acquired after the shutter-off frame; and generating a target image frame corresponding to the image frame acquired after the shutter-off frame, based on the restored signal.

Other features and aspects will be apparent from the following detailed description, the drawings, and the claims.

BRIEF DESCRIPTION OF THE DRAWINGS

FIG. 1 illustrates an example of an electronic device.
FIG. 2 illustrates an example of a shutter-off shooting technique.
FIG. 3A illustrates an example of a method of removing a remaining signal before a shutter-off.
FIG. 3B illustrates an example of a method of removing a remaining signal before a shutter-off.
FIG. 4 illustrates an example of a method of removing a remaining signal after a shutter-off.
FIG. 5 illustrates an example of a method of restoring a shutter-off frame.
FIG. 6 illustrates an example of an image acquisition method.
FIGS. 7A and 7B illustrate an example of an image sensor.
FIG. 8 illustrates an example of an aperiodic shutter-off shooting technique.
FIG. 9 illustrates an example of a method of restoring an image using a residual signal.
FIG. 10 illustrates an example of a method of acquiring a short-exposure image.
FIG. 11 illustrates an example of a configuration of an electronic device.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples. Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms, including technical and scientific terms, used herein have the same meaning as commonly understood by one of ordinary skill in the art to which this disclosure pertains and based on an understanding of the disclosure of the present application. It will be further understood that terms, such as those defined in commonly-used dictionaries, are to be interpreted as having a meaning that is consistent with their meaning in the context of the relevant art and the disclosure of the present application, and are not to be interpreted in an idealized or overly formal sense unless expressly so defined herein.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

The examples may be implemented as various types of products, such as, for example, a personal computer (PC), a laptop computer, a tablet computer, a smartphone, a television (TV), a smart home appliance, an intelligent vehicle, a kiosk, and a wearable device. Hereinafter, examples will be described in detail with reference to the accompanying drawings. In the drawings, like reference numerals are used for like elements.

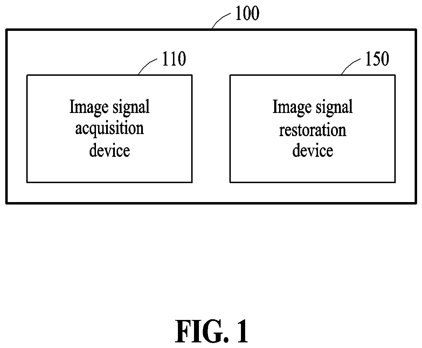

FIG. 1 illustrates an example of an electronic device.

Referring to FIG. 1, an electronic device 100 according to one or more embodiments may include an image signal acquisition device 110 and an image signal restoration device 150. However, not all the illustrated components are essential. The electronic device 100 may be implemented by more components than the illustrated components, and the electronic device 100 may be implemented by less components.

The image signal acquisition device 110 according to one or more embodiments may generate a plurality of image frames through continuous shooting. The image signal acquisition device 110 may include various optical image acquisition devices capable of high-speed continuous shooting, for example, an ultra-high-speed camera, a medical imaging device, a semiconductor measurement device, a vehicle camera, and the like.

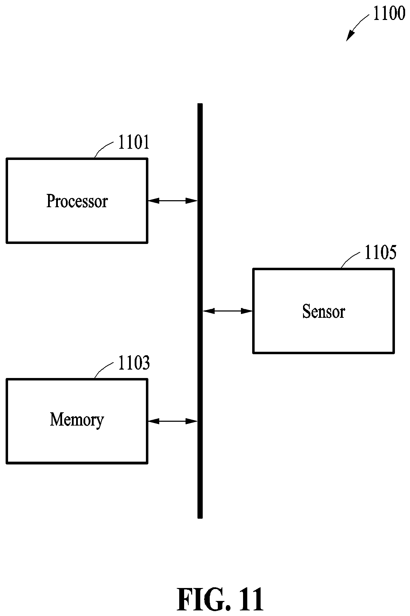

The image signal acquisition device 110 may include a sensor (e.g., a sensor 1105 of FIG. 11). For example, the image signal acquisition device 110 may include an image sensor that converts an optical signal into an electrical signal. The image sensor may include a lens and a photodiode. The image sensor may include a contact image sensor (CIS) and a charge-coupled device (CCD) image sensor. However, the sensor is not limited to the foregoing examples, and may include various types of image sensors, such as a light detection and ranging (LiDAR) sensor, a quantum dot (QD) image sensor, one-dimensional (1D), two-dimensional (2D), and three-dimensional (3D) image sensors, and the like. For example, the sensor may also include a sensor for acquiring a signal in a form other than an image.

Light incident through the lens to the imaging sensor may be converted into an electrical signal through the photodiode, and the image signal acquisition device 110 may construct or generate an image by measuring the electrical signal. In the process of converting photons into an electrical signal through the photodiode, electric charges converted during an exposure time may be accumulated in pixels.

When capturing images continuously at high speed, it may be difficult for a typical electronic device to secure a signal-to-noise ratio because an image signal is small due to a short exposure time for image acquisition. In contrast to the typical electronic device, the electronic device 100 according to one or more embodiments may acquire (e.g., generate) high-quality images with a high signal-to-noise ratio even in high-speed shooting using the image signal acquisition device 110 and the image signal restoration device 150.

For example, the image signal acquisition device 110 according to one or more embodiments may use an image sensor including a photodiode with high sensitivity to acquire high-quality images with a high signal-to-noise ratio even in high-speed shooting. For example, the image signal acquisition device 110 may use an image sensor including an organic photodiode (OPD). For example, the image signal acquisition device 110 may increase the sensitivity by using the OPD, thereby acquiring high-quality images with a high signal-to-noise ratio in high-speed shooting such as a 960-frame per second (fps) slow motion video. As described in examples in detail below, an OPD may substitute for a portion or the entirety of a photodiode in the CIS and thereby increase sensitivity while maintaining the same CIS structure.

When using an OPD to improve sensitivity during high-speed shooting, high-quality images with a high signal-to-noise ratio may be acquired due to high sensitivity for the same acquisition time, and when the same signal-to-noise ratio signal is acquired, the acquisition time may be reduced, and thus, images may be acquired at a high frame rate.

However, when the OPD has a low charge reduction of the photodiode compared to an existing silicon photodiode (SiPD), a remaining signal may remain in subsequent frames. In the typical electronic device, the remaining signal due to a slow photoresponse may cause image deterioration such as motion blur, halation, and color distortion due to signal saturation, and the like.

In contrast to the typical electronic device, the electronic device 100 according to one or more embodiments may use a shutter-off shooting technique that reduces image deterioration due to remaining signals and easily estimates and removes remaining signals. The image signal acquisition device 110 may construct an image with a signal that remains in the photodiode without acquiring a signal of a corresponding time through a shutter-off during continuous shooting.

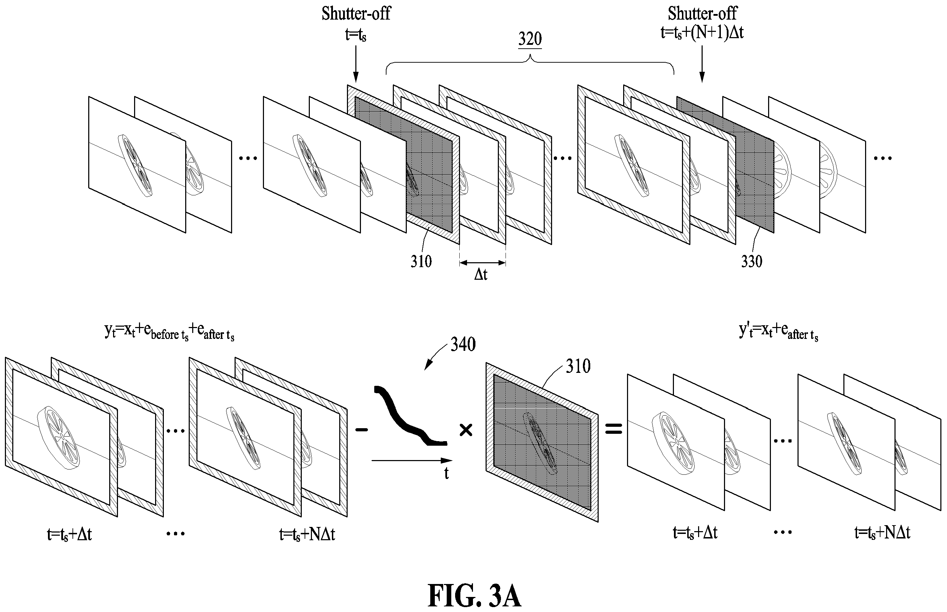

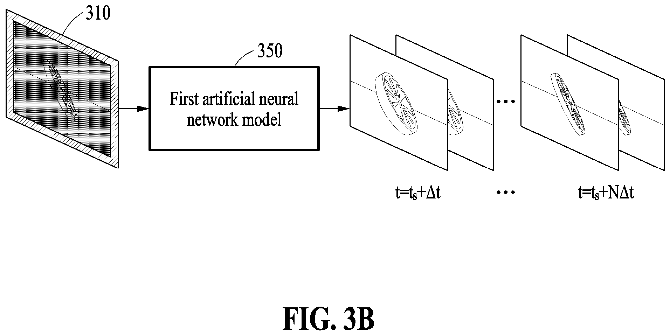

The shutter-off of one or more embodiments may not acquire a signal of a corresponding time and thus, may prevent a remaining signal due to the corresponding signal from remaining in a subsequent image frame, thereby reducing deterioration caused by the remaining signal. Thereafter, the image signal restoration device 150 may acquire remaining signal information generated before the shutter-off from a corresponding frame, and estimate and compensate for image deterioration that occurs in an image after the shutter-off due to the previous signal. A deteriorated image may be restored by specializing the image acquired by the image signal acquisition device 110, which is configured with a high-sensitivity photodiode and a shutter-off high-speed shooting technique, by the image signal restoration device 150 using an artificial neural network-based model. Examples of the detailed operation of the image signal restoration device 150 according to one or more embodiments will be described below with reference to FIGS. 3 to 5. In a non-limiting example, the electronic device 100 may be or include electronic device 1100 of FIG. 11, the image signal acquisition device 110 may include the sensor 1105 of FIG. 11, and the image signal restoration device 150 may include a processor 1101 and a memory 1103 of FIG. 11.

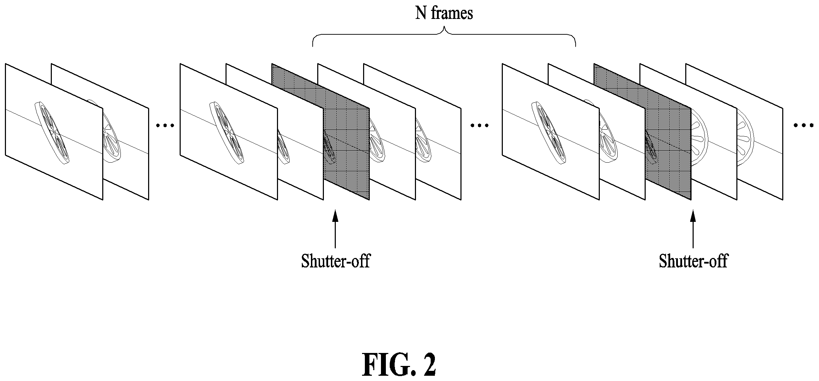

FIG. 2 illustrates an example of a shutter-off shooting technique.

The description provided with reference to FIG. 1 may also apply to FIG. 2. Referring to FIG. 2, a shutter-off shooting technique according to one or more embodiments may be a shooting technique for performing a shutter-off during continuous shooting, wherein the shutter-off may be an operation of not acquiring a signal of a corresponding time. Therefore, during the shutter-off, the signal of the corresponding time may not be acquired, and an image may be constructed with a signal that remains in a photodiode (e.g., a signal generated before the corresponding time). The image generated with a signal that remains in the photodiode during a shutter-off may be referred to as a shutter-off frame or a remaining signal image.

The electronic device 100 according to one or more embodiments may perform a shutter-off at a predetermined time and frequency during continuous shooting. For example, the electronic device 100 may periodically perform a shutter-off for every N frames. Alternatively, the electronic device 100 may aperiodically perform a shutter-off.

The electronic device 100 of one or more embodiments may minimize a remaining signal that remains in a subsequent frame due to a slow photoresponse decay of a high-sensitivity photodiode (for example, an OPD) through a shutter-off shooting technique.

The image signal restoration device 150 may estimate a remaining signal before the shutter-off using the shutter-off frame and remove the remaining signal from an image frame. Examples of methods of removing a remaining signal before a shutter-off will be described below with reference to FIGS. 3A and 3B.

FIG. 3A illustrates an example of a method of removing a remaining signal before a shutter-off. The image signal restoration device 150 may estimate a remaining signal that remains in an image frame after a shutter-off using a shutter-off frame acquired during the shutter-off and a parameter of a sensor, and remove the estimated remaining signal from the image frame.

Referring to FIG. 3A, in an example, a first shutter-off was at $t = t_s$, and a second shutter-off was at $t = t_s + (N + 1)\Delta t$. A first shutter-off frame 310 may be generated at the first shutter-off, and a second shutter-off frame 330 may be generated at the second shutter-off.

N image frames may be generated between the first shutter-off frame 310 and the second shutter-off frame 330, and the image frames between the shutter-off frames may be referred to as shutter-off period frames 320. The image signal restoration device 150 may estimate a remaining signal due to a signal before the first shutter-off using the first shutter-off frame 310, and remove the remaining signal due to the signal before the first shutter-off from the shutter-off period frames 320. Thus, the first shutter-off frame 310, which is the shutter-off frame used to remove the remaining signal in the shutter-off period frames 320, may be referred to as the target shutter-off frame of the shutter-off period frames 320.

Of the shutter-off period frames 320, an image frame corresponding to a time $t > t_s$ may be referred to as a target image frame. A target image frame may refer to a specific image frame that is the focus of processing or analysis in the processor-implemented method. The target image frame may be the frame from which noise or unwanted signals are to be removed to enhance image quality. The image signal restoration device 150 may remove the remaining signal due to a slow photoresponse of the photodiode from the target image frame.

When an ideal signal of the target image frame is denoted as $x_t$, a measurement signal measured or generated by a sensor is denoted as $y_t$, a remaining signal due to a signal before a shutter-off is denoted as $e_{before\ t_s}$, and a remaining signal due to a signal after the shutter-off is denoted as $e_{after\ t_s}$, the measurement signal may be expressed by Equation 1 below, for example.

Equation 1:

$$y_t = x_t + e_{before\ t_s} + e_{after\ t_s}$$

Hereinafter, the remaining signal due to the signal before the shutter-off (e.g., $e_{before\ t_s}$) may be referred to as a first remaining signal, and the remaining signal due to the signal after the shutter-off (e.g., $e_{after\ t_s}$) may be referred to as a second remaining signal.

When an image is constructed with residual charges of the photodiode without acquiring a signal of a corresponding time in the first shutter-off frame 310, the first shutter-off frame 310 may be a remaining signal image before the shutter-off.

The image signal restoration device 150 may estimate the effect of the measured afterimage on the image after the shutter-off using the first shutter-off frame 310 and photoresponse information 340 of the photodiode. Thereafter, the image signal restoration device 150 may remove the remaining signal that the signal before the shutter-off affects the image after the shutter-off. For example, the image signal restoration device 150 may estimate and remove $e_{before\ t_s}$ from the measurement signal corresponding to the shutter-off period frames 320 using the first shutter-off frame 310 and the photoresponse information 340 of the photodiode, which are remaining signal information acquired during the shutter-off, and thus, may restore a signal as expressed by Equation 2 below, for example, through this process. For example, the image signal restoration device 150 may estimate $e_{before\ t_s}$ through an operation (e.g., a multiplication operation) between a signal corresponding to the first shutter-off frame 310 and the photoresponse information 340 of the photodiode.

Equation 2:

$$y_t{'} = x_t + e_{after\ t_s}$$

FIG. 3B illustrates an example of a method of removing a remaining signal before a shutter-off. Referring to FIG. 3B, the image signal restoration device 150 may estimate and remove a first remaining signal using an artificial neural network. For example, the image signal restoration device 150 may remove the first remaining signal from a measurement signal corresponding to shutter-off period frames by inputting the target shutter-off frame 310 into a first artificial neural network model 350.

The first artificial neural network model 350 according to one or more embodiments may be trained to remove the first remaining signal from the measurement signal corresponding to the shutter-off period frames using the shutter-off frame. Training of an artificial neural network model may be performed to determine a parameter that minimizes a loss function. The loss function may be used as an index to determine an optimal parameter in the process of training the artificial neural network model. The loss function according to one or more embodiments may be defined as the difference between ground truth data (the shutter-off period frames from which the first remaining signal is actually removed) and the shutter-off period frames from which the first remaining signal is removed, output from the first artificial neural network model 350, and a parameter that minimizes the loss function may be determined. The method of estimating the first remaining signal is not limited to the method described above, and various methods may be adopted.

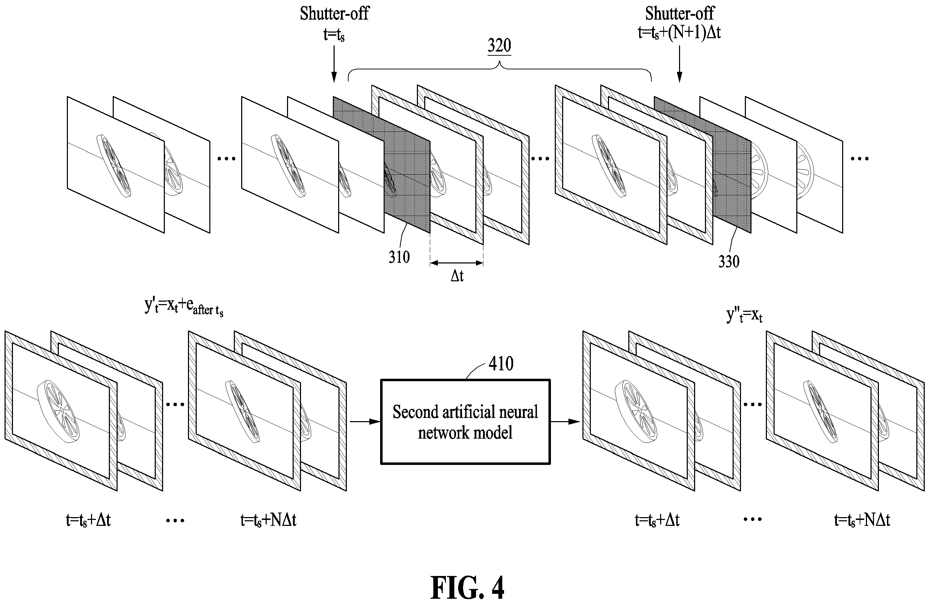

FIG. 4 illustrates an example of a method of removing a remaining signal after a shutter-off. Referring to FIG. 4, although the first remaining signal is removed from the shutter-off period frames 320, a remaining signal may be generated again during the image acquisition process resumed after the shutter-off.

When signal acquisition is resumed after a first shutter-off, a remaining signal (e.g., the second remaining signal) due to the signal acquisition after the first shutter-off may remain in the target image frame. For example, when the target image frame is a fourth image frame after the first shutter-off, the target image frame may include a remaining signal due to acquisition of first to third image frames after the first shutter-off.

The image signal restoration device 150 may acquire a target image frame from which the second remaining signal is removed based on an artificial neural network model. For example, the image signal restoration device 150 may acquire the target image frame from which the second remaining signal is removed by inputting the shutter-off period frames from which the first remaining signal is removed into a second artificial neural network model 410. The image signal restoration device 150 may acquire a signal from which the second remaining signal is removed, as expressed by Equation 3 below, for example, through this process.

Equation 3:

$$y_t^{\prime\prime} = x_t$$

The second artificial neural network model 410 according to one or more embodiments may be trained to output the target image frame from which the second remaining signal is removed using shutter-off period frames. A loss function according to one or more embodiments may be defined as the difference between ground truth data (the target image frame from which the second remaining signal is actually removed) and the target image frame from which the second remaining signal is removed, output from the second artificial neural network model 410, and a parameter that minimizes the loss function may be determined.

Since the remaining signal information changes based on the first shutter-off frame 310, the electronic device 100 of one or more embodiments may consider the shutter-off period frames 320 without the need to consider the entire image series for image restoration, which is efficient. For example, when the image signal restoration device 150 compensates for the first remaining signal, the image signal restoration device 150 of one or more embodiments may restore an image using only the shutter-off period frames 320 instead of the entire image series to compensate for the second remaining signal, thereby reducing computing resources to be used for image restoration. However, the method of removing the remaining signal after the shutter-off is not limited to the method described above. For example, the image signal restoration device 150 may estimate and remove the second remaining signal through a signal processing method.

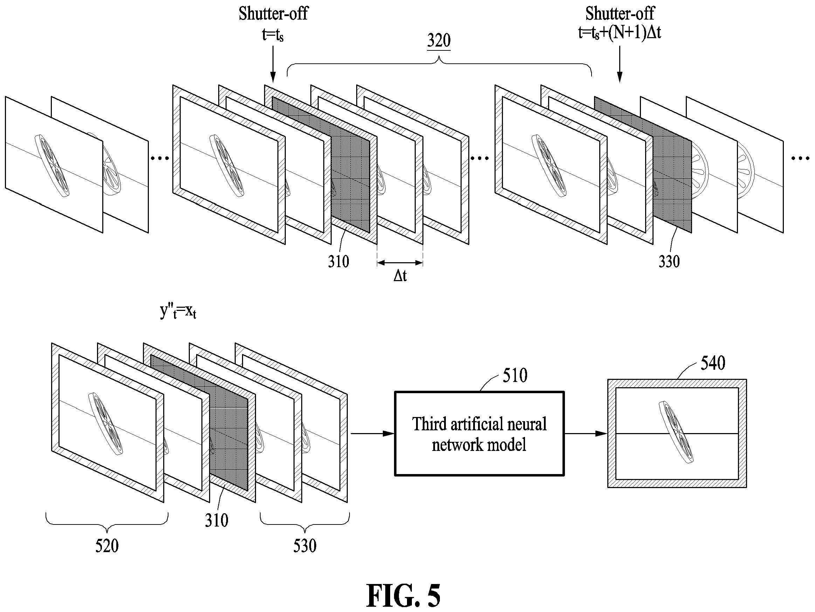

FIG. 5 illustrates an example of a method of restoring a shutter-off frame.

Referring to FIG. 5, the image signal restoration device 150 may have removed the remaining signal in the acquired image through a remaining signal removing method, but may not yet have acquired information about a shutter-off frame.

Accordingly, the image signal restoration device 150 may restore the shutter-off frame using neighboring frame information. For example, the image signal restoration device 150 may restore an image frame corresponding to the shutter-off frame by inputting a predetermined number of before and after image frames based on the shutter-off frame into a third artificial neural network model 510.

For example, the image signal restoration device 150 may restore an image frame 540 corresponding to the first shutter-off frame 310 by inputting two previous image frames 520 and two subsequent image frames 530 of the first shutter-off frame 310 into the third artificial neural network model 510. However, the number of image frames used to restore the shutter-off frame is not limited to the example described above.

At this time, the third artificial neural network model 510 used to restore the shutter-off frame may be integrated with the second artificial neural network model 410 or may perform sequential processing.

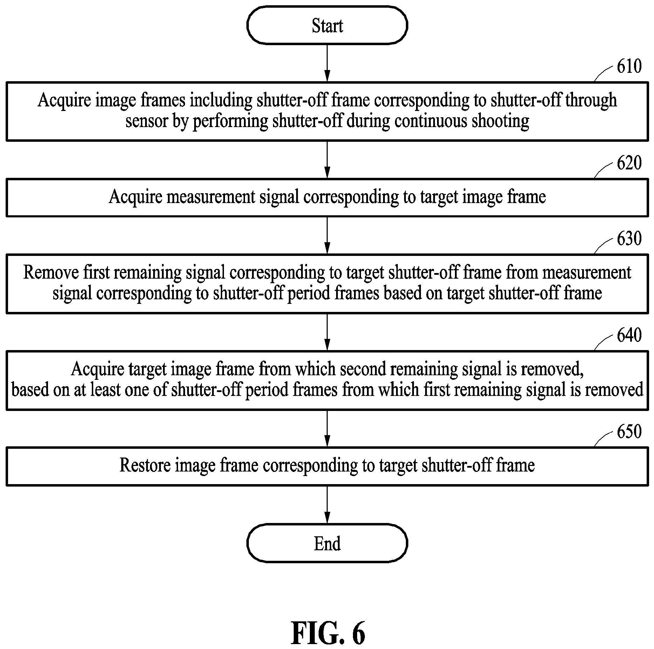

FIG. 6 illustrates an example of an image acquisition method.

For ease of description, it is described that operations 610 to 650 are performed by the electronic device 100 illustrated in FIG. 1. However, operations 610 to 650 may also be performed by any suitable electronic device and in any suitable system.

Furthermore, the operations of FIG. 6 may be performed in the shown order and manner. However, the order of one of more of the operations may change, one or more of the operations may be omitted, and two or more of the operations shown in FIG. 6 may be performed in parallel or simultaneously, without departing from the scope of the shown example.

In operation 610, the electronic device 100 according to one or more embodiments may acquire image frames including a shutter-off frame corresponding to a shutter-off through a sensor by performing the shutter-off during continuous shooting. The shutter-off frame may construct an image with a residual charge of a photodiode forming the sensor without acquiring a signal during a time corresponding to the shutter-off.

In operation 620, the electronic device 100 according to one or more embodiments may acquire a measurement signal corresponding to a target image frame.

In operation 630, the electronic device 100 according to one or more embodiments may remove, based on a target shutter-off frame corresponding to the target image frame, a first remaining signal corresponding to the target shutter-off frame from a measurement signal corresponding to shutter-off period frames. A target shutter-off frame may refer to a shutter-off frame associated with the target image frame. In other words the target shutter-off frame is a specific shutter-off frame that is associated with the target image frame which is an image frame the processor-implemented method intends to enhance.

The image signal restoration device 150 may estimate the first remaining signal corresponding to the target shutter-off frame based on the target shutter-off frame corresponding to the target image frame and parameter information of the sensor. The image signal restoration device 150 may estimate a remaining signal due to a signal before a shutter-off corresponding to the target shutter-off frame based on the target shutter-off frame and information on a photodiode forming the sensor.

The electronic device 100 may remove the first remaining signal from the measurement signal corresponding to the shutter-off period frames including image frames between the target image frame and the target shutter-off frame. The image signal restoration device 150 may acquire a target image frame from which a remaining signal due to a signal after the shutter-off corresponding to the target shutter-off frame is removed.

Alternatively or additionally, the image signal restoration device 150 may remove the first remaining signal from a measurement signal corresponding to shutter-off period frames by inputting the target shutter-off frame into a first artificial neural network model.

In operation 640, the electronic device 100 according to one or more embodiments may acquire a target image frame from which a second remaining signal is removed based on at least one of the shutter-off period frames from which the first remaining signal is removed.

The image signal restoration device 150 may acquire the target image frame from which the second remaining signal is removed by inputting the shutter-off period frames from which the first remaining signal is removed into a second artificial neural network model.

In operation 650, the electronic device 100 according to one or more embodiments may restore an image frame corresponding to the target shutter-off frame. The image signal restoration device 150 may acquire the target image frame from which the second remaining signal is removed by inputting a predetermined number of before and after image frames based on the target shutter-off frame into a third artificial neural network model.

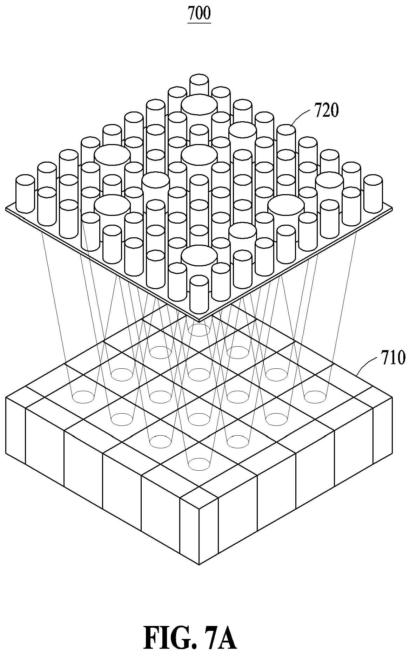

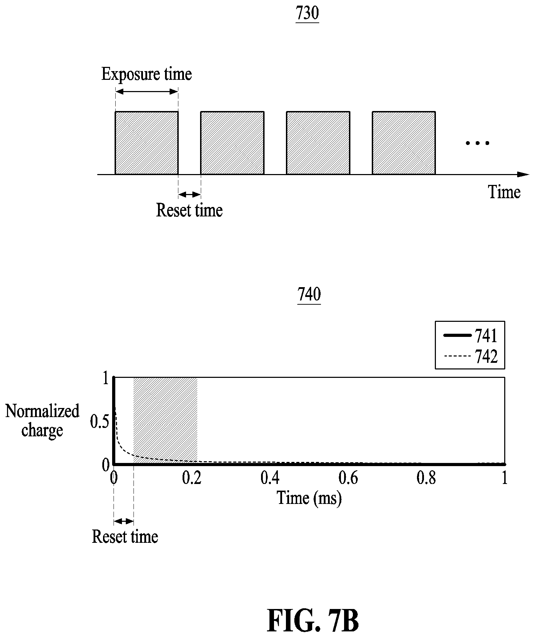

FIGS. 7A and 7B illustrate an example of an image sensor.

Referring to FIG. 7A, a sensor 700 according to one or more embodiments may further include an optical structure 720 for improving sensitivity, in addition to an image sensor 710 (e.g., any of the image sensors and/or sensors described above with reference to FIGS. 1 to 6).

The image sensor 710 may include an OPD or may be a hybrid image sensor including an OPD and a SiPD.

The sensor 700 may reduce an exposure time without a loss of a signal-to-noise ratio and secure a reset time by introducing the optical structure 720 for improving sensitivity to the image sensor 710.

Diagram 730 in FIG. 7B shows an exposure time for acquiring a signal during continuous shooting and a reset time not for acquiring a signal. Referring to diagram 740, a first graph 741 is a graph showing a decrease in photodiode residual charge during a reset time when only the image sensor 710 is used, and a second graph 742 is a graph showing a decrease in photodiode residual charge during the reset time when the sensor 700 with the optical structure 720 for improving sensitivity applied is used.

Comparing the first graph 741 and the second graph 742, it may be learned that remaining signals may be reduced because the residual charge of the photodiode decreases during the reset time additionally secured when the sensor 700 with the optical structure 720 for improving sensitivity applied is used.

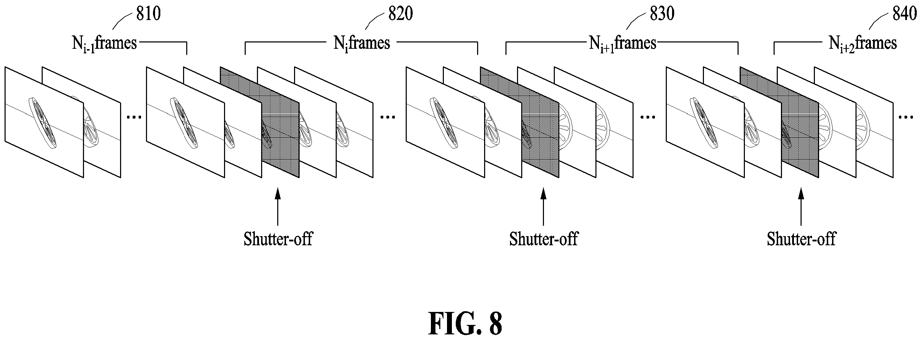

FIG. 8 illustrates an example of an aperiodic shutter-off shooting technique.

As described above, the electronic device 100 may perform a shutter-off at a predetermined time and frequency during continuous shooting. For example, the electronic device 100 may periodically perform a shutter-off for every N frames.

Alternatively, referring to FIG. 8, the electronic device 100 may aperiodically perform a shutter-off and may adjust the effect of the shutter-off and resources for image acquisition and restoration by variably adjusting the frequency and timing of the shutter-off.

For example, first shutter-off period frames 810 may include $N_{i-1}$ frames, second shutter-off period frames 820 may include $N_i$ frames, third shutter-off period frames 830 may include $N_{i+1}$ frames, and fourth shutter-off period frames 840 may include $N_{i+2}$ frames.

Furthermore, the electronic device 100 may optimize the image signal restoration device 150 to be specialized to an aperiodic image acquisition method.

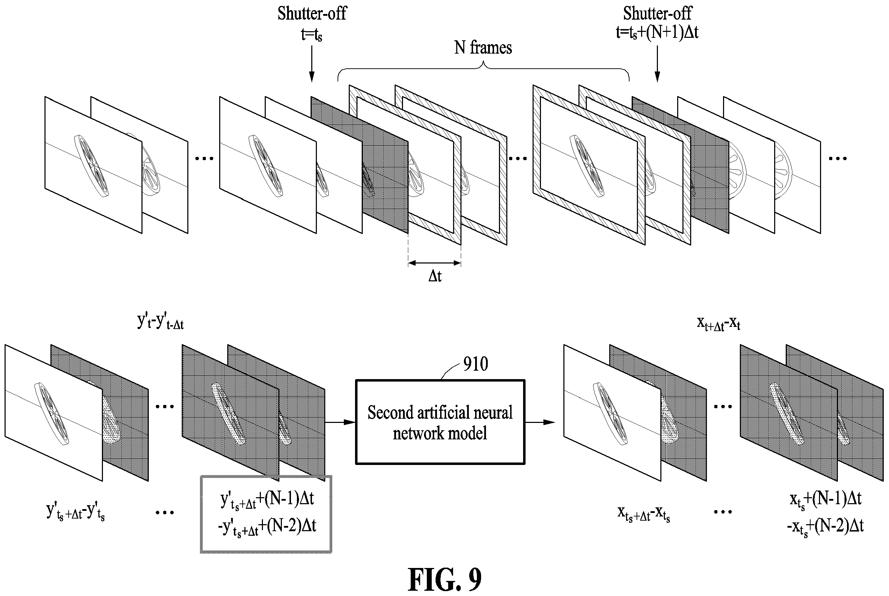

FIG. 9 illustrates an example of a method of restoring an image using a residual signal.

When a plurality of image frames are acquired through high-speed continuous shooting, the difference between neighboring frames may not be significant. Accordingly, the image signal restoration device 150 according to one or more embodiments may restore an image using a residual signal of image frames, rather than using an acquired signal of the image frames as it is.

A residual signal of an i-th image frame may be the difference between the i-th image frame and an (i-1)-th image frame.

Referring to FIG. 9, the image signal restoration device 150 may acquire a residual signal of shutter-off period frames from which a first remaining signal is removed, and acquire a target image frame from which a second remaining signal is removed by inputting the residual signal into a second artificial neural network model 910.

For example, the residual signal of the target image frame from which the first remaining signal is removed may be expressed by Equation 4 below, for example.

$$\text{Equation 4:}$$
$$y_t^{'} - y_{t-\Delta t}^{'}$$

Since $y_t^{'}$ is input into the first artificial neural network model 410 in FIG. 4 whereas $y_t^{'} - y_{t-\Delta t}^{'}$ less than $y_t^{'}$ is input into the first artificial neural network model 910 in FIG. 9, less signal processing resources such as memory may be used when restoring an image using the residual signal.

Similarly, the image signal restoration device 150 may acquire a residual signal between shutter-off period frames, and acquire shutter-off period frames from which the first remaining signal is removed based on the residual signal between the shutter-off period frames.

For example, the residual signal of the target image frame from which the first remaining signal is removed may be expressed by Equation 5 below, for example.

Equation 5:

$$y_t^{\prime\prime} - y_{t-\Delta t}^{\prime\prime}$$

The image signal restoration device 150 may acquire the target image frame from which the second remaining signal is removed by inputting the residual signal between the shutter-off period frames into a first artificial neural network model.

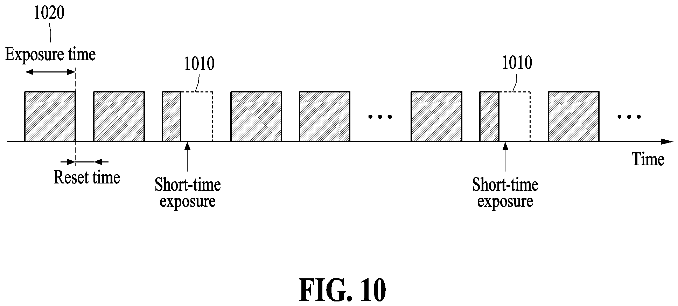

FIG. 10 illustrates an example of a method of acquiring a short-exposure image.

The image signal acquisition device 110 according to one or more embodiments may acquire an image with a short exposure time instead of a shutter-off.

Referring to FIG. 10, the image signal acquisition device 110 may periodically or aperiodically acquire an image 1010 with a short exposure time instead of a shutter-off. Short exposure may be exposure having a shorter exposure time than an exposure time 1020 for acquiring a signal in normal continuous shooting.

The image signal restoration device 150 may generate a high dynamic range (HDR) image based on the image 1010 with a short exposure time. In this case, as well, the image signal restoration device 150 may remove the first remaining signal and the second remaining signal using the image 1010 with a short exposure time.

FIG. 11 illustrates an example of a configuration of an electronic device.

Referring to FIG. 11, an electronic device 1100 may include a processor 1101 (e.g., one or more processors), a memory 1103 (e.g., one or more memories), and a sensor 1105 (e.g., one or more sensors).

The processor 1101 according to one or more embodiments may perform any one, any combination, or all of the operations and/or methods described above with reference to FIGS. 1 to 10. The processor 1101 may acquire image frames including a shutter-off frame corresponding to a shutter-off by performing the shutter-off during continuous shooting, acquire a measurement signal corresponding to a target image frame, remove, based on a target shutter-off frame corresponding to the target image frame, a first remaining signal corresponding to the target shutter-off frame from a measurement signal corresponding to shutter-off period frames including image frames between the target image frame and the target shutter-off frame, and acquire a target image frame from which a second remaining signal is removed based on at least one of the shutter-off period frames from which the first remaining signal is removed.

The memory 1103 according to one or more embodiments may be a volatile memory or a non-volatile memory, and the memory 1103 may store data (e.g., parameters of first to third artificial neural network models that are trained) to be used for performing operation restoration. For example, the memory 1103 may include a non-transitory computer-readable storage medium storing instructions that, when executed by the processor 1101, configure the processor 1101 to perform any one, any combination, or all of the operations and/or methods described herein with reference to FIGS. 1 to 10.

The sensor 1105 according to one or more embodiments may include an image sensor. The sensor 1105 may include an image sensor including an OPD. The sensor 1105 may include a hybrid image sensor including an OPD and a SiPD. The sensor 1105 may include an image sensor and an optical structure for improving sensitivity.

The electronic device 1100 according to one or more embodiments may further include other components not shown in the drawings. For example, the electronic device 1100 may further include a communication module and an input/output interface including an input device and an output device as means for interface with the communication module. In addition, for example, the electronic device 1100 may further include other components such as a transceiver, various sensors, and a database.

The electronic devices, image signal acquisition devices, image signal restoration devices, sensors, image sensors, optical structures, processors, memories, electronic device 100, image signal acquisition device 110, image signal restoration device 150, sensor 700, image sensor 710, optical structure 720, electronic device 1100, processor 1101, memory 1103, and sensor 1105 described herein, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-11 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above and all drawing disclosures, the scope of the disclosure is also inclusive of the claims and their equivalents, i.e., all variations within the scope of the claims and their equivalents are to be construed as being included in the disclosure.

**Claims**

1. A processor-implemented method with image acquisition, the method comprising:

   acquiring image frames comprising a shutter-off frame corresponding to a shutter-off through a sensor by performing the shutter-off during continuous shooting;
   acquiring a first measurement signal corresponding to a target image frame;
   removing, based on a target shutter-off frame corresponding to the target image frame, a first remaining signal corresponding to the target shutter-off frame from a second measurement signal corresponding to one or more shutter-off period frames comprising one or more image frames between the target image frame and the target shutter-off frame; and
   generating an enhanced target image frame from which a second remaining signal is removed based on one or more of the shutter-off period frames from which the first remaining signal is removed.

2. The method of claim 1, wherein the removing of the first remaining signal comprises:

   estimating the first remaining signal based on the target shutter-off frame and parameter information of the sensor; and
   removing the first remaining signal from the measurement signal corresponding to the shutter-off period frames, wherein the estimating of the first remaining signal preferably comprises estimating a remaining signal due to a signal generated before a shutter-off corresponding to the target shutter-off frame based on the t21arget shutter-off frame and information on a photodiode forming the sensor.

3. The method according to any one of the previous claims, wherein the removing of the first remaining signal comprises removing the first remaining signal from the measurement signal corresponding to the shutter-off period frames by inputting the target shutter-off frame into a first artificial neural network model.

4. The method according to any one of the previous claims, wherein the generating of the target image frame from which the second remaining signal is removed comprises generating the target image frame from which the second remaining signal is removed by inputting shutter-off period frames from which the first remaining signal is removed into a second artificial neural network model.

5. The method according to any one of the previous claims, further comprising restoring an image frame corresponding to the target shutter-off frame by inputting a predetermined number of before and after image frames based on the target shutter-off frame into a third artificial neural network model.

6. The method according to any one of the previous claims, wherein the shutter-off frame constructs an image with a residual charge of a photodiode forming the sensor without acquiring a signal during a time corresponding to the shutter-off.

7. The method according to any one of the previous claims, wherein the generating of the target image frame from which the second remaining signal is removed comprises generating a target image frame from which a remaining signal due to a signal after a shutter-off corresponding to the target shutter-off frame is removed.

8. The method according to any one of the previous claims, wherein the sensor comprises an organic photodiode (OPD), and/or wherein the sensor comprises a hybrid image sensor comprising an OPD and a silicon photodiode.

9. The method according to any one of the previous claims, wherein the acquiring of the image frames comprises:

   determining a frequency and timing of the shutter-off; and

acquiring the image frames by performing the shutter-off according to the determined frequency and timing.

10. The method according to any one of the previous claims, wherein the acquiring of the image frames comprises acquiring the image frames by periodically performing the shutter-off.

11. The method according to any one of the previous claims, wherein the removing of the first remaining signal comprises:

acquiring a residual signal between the shutter-off period frames; and
acquiring the shutter-off period frames from which the first remaining signal is removed based on the residual signal between the shutter-off period frames, wherein the generating of the target image frame from which the second remaining signal is removed preferably comprises:

generating a residual signal between the shutter-off period frames from which the first remaining signal is removed; and
generating the target image frame from which the second remaining signal is removed, based on the residual signal between the shutter-off period frames from which the first remaining signal is removed.

12. The method according to any one of the previous claims, further comprising:

acquiring a short-term image frame corresponding to an exposure time shorter than an exposure time of the image frames; and
generating a high dynamic range (HDR) image based on the short-term image frame.

13. A non-transitory computer-readable storage medium storing instructions that, when executed by one or more processors, configure the one or more processors to perform the method according to any one of the previous claims.

14. An electronic device comprising:

an image signal acquisition device comprising a sensor configured to acquire image frames comprising a shutter-off frame corresponding to a shutter-off by performing the shutter-off during continuous shooting, and acquire a measurement signal corresponding to a target image frame; and
an image signal restoration device comprising a processor configured to perform the steps of the processor-implemented method according to any one of the previous claims 1-12.

15. The electronic device of claim 14, wherein the sensor comprises an organic photodiode (OPD), and/or wherein the sensor comprises a hybrid image sensor comprising an OPD and a silicon photodiode.

100

110

Image signal
acquisition
device

150

Image signal
restoration
device

## FIG. 1

**FIG. 2**

Shutter-off
$t=t_s$

Shutter-off
$t=t_s+(N+1)\Delta t$

320

310

330

$\Delta t$

$y_t = x_t + e_{before\,t_s} + e_{after\,t_s}$

$y'_t = x_t + e_{after\,t_s}$

340

310

$t=t_s+\Delta t$ ... $t=t_s+N\Delta t$

$t$

$t=t_s+\Delta t$ ... $t=t_s+N\Delta t$

FIG. 3A

EP 4 550 821 A1

310

350

First artificial neural network model

$t=t_s+\Delta t$ $\cdots$ $t=t_s+N\Delta t$

# FIG. 3B

Shutter-off
$t=t_s$

Shutter-off
$t=t_s+(N+1)\Delta t$

320

310

330

$\Delta t$

$y'_t=x_t+e_{after\,t_s}$

$y''_t=x_t$

410

Second artificial neural
network model

$t=t_s+\Delta t$ $\cdots$ $t=t_s+N\Delta t$

$t=t_s+\Delta t$ $\cdots$ $t=t_s+N\Delta t$

**FIG. 4**

EP 4 550 821 A1

Shutter-off
$t = t_s$

Shutter-off
$t = t_s + (N+1)\Delta t$

320

310

$\Delta t$

330

$y''_t = x_t$

Third artificial neural network model

510

540

310

520

530

FIG. 5

Start

610

Acquire image frames including shutter-off frame corresponding to shutter-off through sensor by performing shutter-off during continuous shooting

620

Acquire measurement signal corresponding to target image frame

630

Remove first remaining signal corresponding to target shutter-off frame from measurement signal corresponding to shutter-off period frames based on target shutter-off frame

640

Acquire target image frame from which second remaining signal is removed, based on at least one of shutter-off period frames from which first remaining signal is removed

650

Restore image frame corresponding to target shutter-off frame

End

## FIG. 6

700

720

710

# FIG. 7A

730

Exposure time

Reset time

Time

740

741
742

Normalized
charge

Reset time

Time (ms)

**FIG. 7B**

FIG. 8

Shutter-off
$t=t_s$

Shutter-off
$t=t_s+(N+1)\Delta t$

N frames

$\Delta t$

$y'_t-y'_{t-\Delta t}$

$x_{t+\Delta t}-x_t$

910

$\cdots$

Second artificial neural
network model

$\cdots$

$y'_{t_s+\Delta t}-y'_{t_s}$

$y'_{t_s+\Delta t+(N-1)\Delta t}$
$-y'_{t_s+\Delta t+(N-2)\Delta t}$

$x_{t_s+\Delta t}-x_{t_s}$

$x_{t_s+\Delta t+(N-1)\Delta t}$
$-x_{t_s+\Delta t+(N-2)\Delta t}$

**FIG. 9**

**FIG. 10**

1100

1101

Processor

1105

Sensor

1103

Memory

**FIG. 11**

Europäisches
Patentamt

European
Patent Office

Office européen
des brevets

# EUROPEAN SEARCH REPORT

**Application Number**

EP 24 20 9249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/141406 A1 (MABUCHI KEIJI [US]) 5 May 2022 (2022-05-05) * abstract * * figures 3A-B, 4, 5, 6, 7 * * paragraph [0023] * * paragraph [0037] - paragraph [0044] * ----- | 1-15 | INV. H04N25/63 H04N23/73 |
| Y | US 10 944 914 B1 (LE LONG N [US] ET AL) 9 March 2021 (2021-03-09) * abstract * * figures 2, 6, 7A * * column 5, line 61 - line 67 * * column 6, line 1 - line 6 * * column 9, line 54 - line 64 * * column 16, line 11 - line 67 * ----- | 1-4, 6-10, 12-15 | |
| Y | US 2021/314474 A1 (YANG ANQI [US] ET AL) 7 October 2021 (2021-10-07) * abstract * * figures 2, 5 * * paragraph [0034] - paragraph [0035] * * paragraph [0052] - paragraph [0060] * * paragraph [0075] - paragraph [0080] * ----- | 1-15 | TECHNICAL FIELDS SEARCHED (IPC) H04N |
| A | US 2022/303494 A1 (NEGORO YUSUKE [JP] ET AL) 22 September 2022 (2022-09-22) * abstract * * paragraph [0069] * ----- | 8,15 | |

The present search report has been drawn up for all claims

| Place of search | Date of completion of the search | Examiner |
|---|---|---|
| Munich | 11 February 2025 | Furlan, Silvano |

EPO FORM 1503 03.82 (P04C01)

**ANNEX TO THE EUROPEAN SEARCH REPORT
ON EUROPEAN PATENT APPLICATION NO.**                EP 24 20 9249

This annex lists the patent family members relating to the patent documents cited in the above-mentioned European search report.
The members are as contained in the European Patent Office EDP file on
The European Patent Office is in no way liable for these particulars which are merely given for the purpose of information.

11-02-2025

| Patent document cited in search report | | Publication date | Patent family member(s) | | Publication date |
|---|---|---|---|---|---|
| US 2022141406 | A1 | 05-05-2022 | CN | 114449188 A | 06-05-2022 |
| | | | TW | 202232942 A | 16-08-2022 |
| | | | US | 2022141406 A1 | 05-05-2022 |
| US 10944914 | B1 | 09-03-2021 | CN | 112995544 A | 18-06-2021 |
| | | | EP | 4066216 A1 | 05-10-2022 |
| | | | KR | 20210069006 A | 10-06-2021 |
| | | | US | 10944914 B1 | 09-03-2021 |
| US 2021314474 | A1 | 07-10-2021 | CN | 113497901 A | 12-10-2021 |
| | | | US | 2021314474 A1 | 07-10-2021 |
| | | | US | 2023022753 A1 | 26-01-2023 |
| | | | WO | 2021201438 A1 | 07-10-2021 |
| US 2022303494 | A1 | 22-09-2022 | JP | WO2021053449 A1 | 25-03-2021 |
| | | | US | 2022303494 A1 | 22-09-2022 |
| | | | WO | 2021053449 A1 | 25-03-2021 |

EPO FORM P0459

For more details about this annex : see Official Journal of the European Patent Office, No. 12/82